# EUROPÄISCHE PATENTSCHRIFT

(11) **EP 3 352 011 B1**
(45) Veröffentlichungstag und Bekanntmachung des Hinweises auf die Patenterteilung: **20.09.2023**
(21) Anmeldenummer: 18151819.2
(22) Anmeldetag: 16.01.2018
(51) Int. Cl.: G03B 15/05, G03B 37/00

(54) **INSPEKTIONSSYSTEM FÜR HOHLKÖRPER**
INSPECTION SYSTEM FOR HOLLOW BODIES
SYSTÈME D'INSPECTION POUR CORPS CREUX

(30) Priorität: 19.01.2017 DE 102017200784
(43) Veröffentlichungstag der Anmeldung: 25.07.2018
(73) Patentinhaber: IBAK Helmut Hunger GmbH & Co. KG, 24148 Kiel (DE)
(72) Erfinder: Böttcher, Marcus, 24222 Schwentinental (DE)
(74) Vertreter: Patentanwälte Vollmann Hemmer Lindfeld Partnerschaft mbB

(56) Entgegenhaltungen:
- DE-C1- 10 240 957
- US-A1- 2014 152 802

## Beschreibung

Die vorliegende Erfindung betrifft ein Inspektionssystem für Hohlkörper gemäß dem Oberbegriff des Anspruchs 1.

Viele Bauwerke, die über Hohlräume verfügen, wie beispielsweise Schächte, Brückenpfeiler, Schornsteine, Windkraftanlagen, benötigen eine regelmäßige Inspektion bzw. gegebenenfalls Wartung. Um eine Inspektion in einem derartigen Hohlraum durchzuführen, ist es notwendig, ein Inspektionssystem in diesen einzubringen.

Hierzu sind im Stand der Technik Inspektionssysteme bekannt, welche in der Lage sind, den zu inspizierenden Hohlraum vollständig abzuscannen. Hierbei spielt die Innenausleuchtung eine wichtige Rolle. Bei den zu inspizierenden Hohlräumen kann es sich einerseits um symmetrische Hohlkörper handeln, andererseits müssen jedoch oftmals auch asymmetrische Hohlkörper inspiziert werden, die während ihrer Inspektion entsprechend auszuleuchten sind.
DE 102 40 957 C1 offenbart eine Beleuchtungseinrichtung für eine Kanalinspektionskamera welche zwei Lampen mit unterschiedlichen Abstrahlcharakteristiken aufweist, um wahlweise eine Beleuchtung mit großem Feldwinkel oder kleinem Feldwinkel realisieren zu können.
US 2014/0152802 A1 offenbart einen Kamerakopf zur Inspektion von Rohrleitungen, welcher zur Beleuchtung eine Vielzahl von LED aufweist, welche, wie auch verschiedene Bildaufnahmeeinrichtungen, wahlweise aktiviert werden können. Darüber hinaus ist es aus dieser Druckschrift bekannt, die Bildaufnahmeeinrichtung in Abhängigkeit der Lage der Kamera, welche von entsprechenden Lagesensoren erfasst wird, zu steuern.

Bei der Inspektion beispielsweise eines Schachtes ist es aus dem Stand der Technik bekannt, ein Kamerasystem, beispielsweise einen 3D-Scanner, welcher z. B. mit zwei entgegengesetzt gerichteten Digitalkameras ausgestattet ist, an einem Kabel in den Schacht herabzulassen, die das gesamte Schachtinnere in einer einzigen vertikalen Befahrung optisch scannen. Hierbei werden Halbkugelbilder erstellt, die nach dem Scan zu vollsphärischen Bildern zusammengesetzt werden.

Während des Scanvorgangs kann es vorkommen, dass sich das Kamerasystem bzw. der Scanner an dem Kabel um die eigene Achse dreht. Diese Drehung wird dann durch eine Rotationskompensation des Bildes ausgeglichen, so dass die Rotation für den Anwender im Scann nicht störend ist. Andererseits kann eine derartige Rotation von vornherein vermieden werden, wenn anstelle eines oder mehrerer Kabel ein starrer Stab verwendet wird, um das Kamerasystem in den Hohlraum herabzulassen. Ein starrer Stab ist jedoch schwierig zu handhaben und nur bis zu einer bestimmten Länge sinnvoll einsetzbar. Darüber hinaus verbleibt dennoch das Problem einer gleichmäßigen Ausleuchtung.

Eine gleichmäßige und vollständige Ausleuchtung des zu inspizierenden Hohlraums ist jedoch, wie oben bereits erwähnt, im Hinblick auf die Bildqualität und somit auf das Inspektionsergebnis essentiell. Hierzu ist es im Stand der Technik bekannt, den 3D-Scanner mit zwei Blitzlichtern auszustatten, wobei jedes Blitzlicht als ringförmige Blitzröhre ausgebildet ist und jeweils eine der beiden entgegengesetzt gerichteten Kameras des Kamerasystems umgibt. Wenn beim Absenken des Kamerasystems, z. B. in einen Schacht, Bilder durch die Kameras in vorbestimmten Abständen aufgenommen werden, leuchten diese Blitzlichter jeweils auf.

Wird der 3D-Scanner nicht-zentrisch in einen Hohlraum oder aber in einen asymmetrischen Hohlraum herabgelassen, dann wird die Ausleuchtung desselben durch die oben erläuterte Konfiguration nicht gleichmäßig erfolgen. Dies hat den Nachteil, dass die Bildqualität nicht optimal ist, denn es können dunkle bzw. überstrahlte Bereiche entstehen, in denen über den Zustand des Hohlraums in dem zu inspizierenden Bauwerk keine zuverlässige Aussage getroffen werden kann.

Daher ist es eine Aufgabe der vorliegenden Erfindung, ein Inspektionssystem für Hohlkörper bereitzustellen, welches in der Lage ist, einen zu inspizierenden Hohlraum gleichmäßig und vollständig auszuleuchten, unabhängig von Rotationen des Kamerasystems oder von der Geometrie des auszuleuchtenden Hohlraums.

Diese Aufgabe wird gemäß der Erfindung durch ein Inspektionssystem mit den Merkmalen gemäß Anspruch 1 gelöst. Vorteilhafte Weiterbildungen sind in den abhängigen Ansprüchen spezifiziert.

Dementsprechend wird erfindungsgemäß ein Inspektionssystem für Hohlkörper mit einer Bildaufnahmeeinrichtung gemäß Anspruch 1 bereitgestellt, welche in den Hohlkörper einbringbar ist und mit einer Beleuchtungseinrichtung zum Ausleuchten des Hohlkörpers versehen ist, wobei die Beleuchtungseinrichtung eine Mehrzahl von Lichtquellen mit unterschiedlichen Abstrahlrichtungen und eine mit den Lichtquellen verbundene Licht-Steuer-Einheit aufweist, welche derart ausgebildet ist, dass sie die Lichtstärke der Lichtquellen einzeln oder in mehreren Gruppen verändern kann. Durch die erfindungsgemäße Konfiguration, welche eine Licht-Steuer-Einheit zur einzelnen oder gruppenweisen Veränderung der Lichtstärke der Mehrzahl von Lichtquellen aufweist, ist es möglich, eine angepasste Beleuchtung entsprechend der jeweiligen Situation in dem Hohlkörper zu erzielen, so dass dieser dann gleichmäßig und vollständig ausgeleuchtet wird. So können in verschiedenen Abstrahlrichtungen des Hohlkörpers gelegene Bereiche durch entsprechende Einstellung der Lichtstärke der Lichtquelle unterschiedlich stark ausgeleuchtet werden. Beispielsweise kann bei einem zu inspizierenden asymmetrischen Hohlkörper die Steuerung der Lichtquellen durch die Licht-Steuer-Einheit derartig erfolgen, dass Lichtquellen, welche näher zu einer gegenüberliegenden zu beleuchtenden Innenwand des Hohlraums sind, schwächer leuchten als diejenigen, die auf einer Seite liegen, die weiter entfernt von der gegenüberliegenden zu beleuchtenden Innenwand des Hohlraums sind. Durch die individuelle Steuerbarkeit der Lichtquellen kann jegliche Hohlraumgeometrie gleichmäßig ausgeleuchtet werden, wobei insbesondere die Innenwandung des Hohlraumes vorzugsweise über den gesamten Innenumfang des Hohlraumes gleichmäßig angeleuchtet wird. Die individuelle Steuerung kann hierbei beispielsweise eine individuelle Dimmbarkeit der einzelnen Lichtquellen umfassen, oder ein gezieltes Ein- und Ausschalten einzelner Lichtquellen.

Mit der Mehrzahl von Lichtquellen mit separat einstellbaren Lichtstärken können neben den Innenwänden von Schächten auch Rohre oder Leitungen gleichmäßig ausgeleuchtet werden, insbesondere, wenn die Beleuchtungseinrichtung nicht auf der Rohrachse liegt. Hierbei kann über die Auswertung eines Lage- oder Beschleunigungssensors während der Befahrung eine Rotationskompensation der Beleuchtung durchgeführt werden, was insbesondere auch für Schiebekameras zur Inspektion in horizontalen Rohren interessant ist, da diese ähnlich wie eine an einem Seil hängende Bildaufnahmeeinrichtung für Schächte um die eigene Achse rotieren können.

Gemäß einer bevorzugten Ausführungsform der Erfindung weist die Licht-Steuer-Einheit eine Einstellfunktion auf, über welche die jeweilige Lichtstärke der Lichtquellen von der Vielzahl von Lichtquellen durch einen Anwender einzeln oder gruppenweise festlegbar ist. Über die Einstellfunktion, welche vorzugsweise über eine Benutzeroberfläche der Licht-Steuer-Einheit bereitgestellt wird, kann der Nutzer die Beleuchtung beispielsweise zu Beginn der Untersuchung an die Geometrie des Hohlkörpers anpassen, indem für einzelne Abstrahlrichtungen eine höhere Lichtstärke gewählt wird als für andere Abstrahlrichtungen. Es ist auch möglich, dass die Licht-Steuer-Einheit direkt mit einer Bildauswerteeinrichtung zusammenwirkt, so dass die Lichtstärke auf Grundlage von Bildinformationen, welche die Bildauswerteeinrichtung auswertet, angepasst wird.

Gemäß einer weiteren bevorzugten Ausführungsform der Erfindung ist die Bildaufnahmeeinrichtung an einem Vorschubelement und insbesondere einem Tragseil oder einem Schiebestab befestigt. Die Ausführungsform mit einem Schiebestab eignet sich besonders für horizontal zu inspizierende Rohre, bei denen ein Schiebekamerasystem eingesetzt wird, das in dem Rohr mittels eines Schiebestabs vorgeschoben wird. Die Verwendung eines Tragseils ist bevorzugt für Inspektionen von senkrechten Hohlkörpern wie Schächten, in welche die Bildaufnahmeeinrichtung an dem Tragseil von oben herabgelassen werden kann.

Vorzugsweise ist die Vielzahl von Lichtquellen ringförmig und insbesondere umfänglich zumindest eines Objektives der Bildaufnahmeeinrichtung angeordnet. Diese Anordnung hat den Vorteil, dass vorzugsweise eine gleichmäßige Ausrichtung in alle Blickrichtungen des Objektivs erreicht werden kann, insbesondere, wenn das Objektiv als Weitwinkelobjektiv, weiter bevorzugt als fish-eye-Objektiv, ausgebildet ist.

In der Bildaufnahmeeinrichtung ist erfindungsgemäß zumindest ein Sensor zur Erfassung einer Lageänderung der Bildaufnahmeeinrichtung relativ zu dem Hohlkörper vorgesehen, wobei der Sensor mit der Licht-Steuer-Einheit verbunden ist und die Licht-Steuer-Einheit derart ausgestaltet ist, dass sie die Lichtstärke der Lichtquellen entsprechend einer durch den Sensor erfassten Lageänderung steuert. Der Sensor ist vorzugsweise ein Sensor, welcher geeignet ist, einen Drehwinkel um die Längsachse des Vorschubelementes, beispielsweise eines Tragseiles zu erfassen. Alternativ oder zusätzlich kann ein Sensor vorgesehen sein, welcher Pendelbewegungen um eine Achse quer zur Vorschubachse erfasst. Der Sensor ist mit der Lichtsteuereinheit derart verknüpft, dass der Lichtsteuereinheit über den Sensor oder eine zwischengeschaltete Steuerelektronik Informationen über eine Lageänderung der Bildaufnahmeeinrichtung in dem Hohlkörper zugeführt werden. Die Lichtsteuereinheit ist derart ausgebildet, dass sie entsprechend die Lichtstärke der einzelnen Lichtquellen so verändert, dass trotz der Lageänderung die Beleuchtungsstärke an den Innenwandungen des Hohlkörpers im Wesentlichen gleich bleibt und die vorzugsweise zuvor von einem Nutzer eingestellte Beleuchtungskonfiguration auch bei einer Bewegung der Bildaufnahmeeinrichtung erhalten bleibt. Bei einer Drehung der Bildaufnahmeeinrichtung bedeutet dies, dass sich einzelne Lichtquellen aus ihrer Abstrahlrichtung in eine neue Abstrahlrichtung bewegen, wobei die vorherige Abstrahlrichtung dann von einer anderen Lichtquelle ausgeleuchtet wird. Die Licht-SteuerEinrichtung steuert die Lichtquellen dabei so an, dass stets die Ausleuchtung in einer definierten Raumrichtung unverändert beibehalten wird, auch wenn sich die einzelnen Lichtquellen relativ zu der Raumrichtung bewegen. Der zumindest eine Sensor ist bevorzugt ein Sensor, welcher auch dazu genutzt wird, die Bildinformationen, welche von der Bildaufnahmeeinrichtung aufgenommen werden, abhängig von der Bewegung der Bildaufnahmeeinrichtung zu kompensieren, sodass die Bildausrichtung auch bei einer Drehung bzw. Bewegung der Bildaufnahmeeinrichtung unverändert bleibt.

Die Licht-Steuer-Einheit ist derart ausgebildet, dass sie die Lichtstärke der Lichtquellen entsprechend einer durch den Sensor erfassten Lageänderung derart steuert, dass die von der Beleuchtungseinrichtung erzeugte Ausleuchtung in zumindest einer Raumrichtung auch bei einer Lageänderung der Beleuchtungseinrichtung im Wesentlichen konstant bleibt. So können Bewegungen der Beleuchtungseinrichtung so kompensiert werden, dass von der Bildaufnahmeeinrichtung dennoch Bilder mit gleichmäßiger Ausleuchtung aufgenommen werden können.

Der zumindest eine Sensor kann beispielsweise ein Bewegungs- und/oder Beschleunigungssensor sein. Hierdurch kann ein Pendeln des Kamerasystems erfasst werden, um die Lichtquellen dann entsprechend den erfassten Daten zu steuern.

Darüber hinaus kann gemäß einer weiteren bevorzugten Ausführungsform der Erfindung der zumindest eine Sensor ein Sensor zur Erfassung eines Drehwinkels und insbesondere ein Gyrosensor sein. Dies ist besonders dann vorteilhaft, wenn das Kamerasystem an Seilen bzw. Kabeln aufgehängt ist bzw. in den Hohlraum herabgelassen wird und es zu einer unbeabsichtigten Rotation des gesamten Systems um die Längsachse des Kabels kommt. Die Ansteuerung der Lichtquellen kann dann entsprechend dem vom Gyrosensor oder Gyroskop ermittelten Wert gesteuert werden, um die Ausleuchtung in einem vorgegebenen Winkel bzw. einer vorgegebenen Raumrichtung zu halten, auch wenn das Kamerasystem rotiert.

Vorzugsweise ist der zumindest eine Sensor derart angeordnet, dass er einen Drehwinkel der Bildaufnahmeeinrichtung um eine Vorschubachse der Bildaufnahmeeinrichtung und/oder eine Achse quer zu dieser Vorschubachse erfasst. Die Vorschubachse ist bei Verwendung eines Seils oder eines Kabels, an welchem die Bildaufnahmeeinrichtung hängt, die Längsachse dieses Kabels. Bei einem anderen Vorschubelement ist es vorzugsweise die Längsachse dieses Vorschubelementes. Ein Sensor, welcher Bewegungen um eine Achse quer zur Vorschubachse erfasst, erfasst Pendelbewegungen, welche beispielsweise beim Herablassen der Bildaufnahmeeinrichtung an einem Seil auftreten können.

Gemäß noch einer weiteren bevorzugten Ausführungsform der Erfindung weist das Inspektionssystem zumindest einen Abstandssensor oder eine Abstands-Erfassungseinrichtung auf, welcher einen Abstand der Beleuchtungseinrichtung zu einer Wand des Hohlkörpers erfasst, wobei die Licht-Steuer-Einheit derart ausgebildet ist, dass sie die Lichtstärken der Lichtquellen auf der Basis des durch den Sensor oder der Abstands-Erfassungseinrichtung erfassten Abstands einstellt. Ein solcher Abstandssensor kann zusätzlich zu den vorangehend beschriebenen Lagesensoren oder alternativ zu diesen Verwendung finden. Über die Erfassung des Abstandes kann die Lichtstärke direkt auf den jeweiligen Abstand abgestimmt werden. Die Abstands-Erfassungseinrichtung kann gemäß einer besonderen Ausführungsform auch so ausgebildet sein, dass sie den Abstand aus den Bildinformationen, welche von der Bildaufnahmeeinrichtung aufgenommen werden, bestimmt. Dies ist insbesondere möglich, wenn die Bildaufnahmeeinrichtung bei ihrer Bewegung durch einen zu inspizierenden Hohlraum ein und denselben Punkt mehrfach aus unterschiedlichen Perspektiven bzw. Vorschubpositionen aufnimmt. In einem solchen Fall ist es möglich die Abstände aus den Bildinformationen zu berechnen. Die so berechneten Abstände können dann der Beleuchtungseinrichtung in der beschriebenen Weise zur Beleuchtungssteuerung zugeführt werden.

Vorteilhaft ist auch, wenn das Inspektionssystem zumindest eine inertiale Messeinheit aufweist, welche eine Position der Beleuchtungseinheit in dem Hohlkörper erfasst, wobei die Licht-Steuer-Einheit derart ausgebildet ist, dass sie die Lichtstärken der Lichtquellen auf der Basis der von der inertialen Messeinheit ermittelten Position der Beleuchtungseinheit einstellt. Dies ermöglicht eine noch bessere Anpassung der jeweiligen Lichtstärken der einzelnen Lichtquellen.

Gemäß noch einer weiteren bevorzugten Ausführungsform der Erfindung ist die Bildaufnahmeeinrichtung als Rundum-Kamerasystem, insbesondere 360°-Kamerasystem mit vorzugsweise zwei entgegengesetzt gerichteten Weitwinkelobjektiven ausgestaltet. Bei den Weitwinkelobjektiven handelt es sich vorzugsweise um fish-eye-Objektive, welche ein halbkugelförmiges Bild aufnehmen. Jedem der beiden Objektive, bzw. Weitwinkelobjektiven ist ein Bildsensor zugeordnet, sodass von den beiden Bildsensoren Bilder in entgegengesetzte Blickrichtungen aufgenommen werden. Die Bildsensoren und die zugehörige Auswerteelektronik können so ausgebildet sein, dass Einzelbilder aufgenommen werden, d. h. die Sensoren nach Art einer Fotokamera arbeiten. Die Bilder der zwei Objektive, welche in entgegengesetzte Blickrichtungen gerichtet sind, können dann von einer Auswerteeinrichtung zu einem vollsphärischen Bild zusammengesetzt werden, wobei von der Auswerteeinrichtung vorzugsweise die Vorschubposition, an welcher das jeweilige Bild aufgenommen wurde, berücksichtigt wird. Es ist jedoch auch möglich, dass die Sensoren nach Art von Videosensoren quasi kontinuierlich Videobilder aufzeichnen, sodass während des Vorschubs der Bildaufnahmeeinrichtung ein Film mit zwei entgegengesetzten Blickrichtungen aufgenommen wird. Auch hierbei lässt sich aus den zwei Videosignalen von der Auswerteeinrichtung vorzugsweise ein 360°-Bildmodell erzeugen, in welchem später virtuell beliebige Stellen zur näheren Betrachtung angefahren werden können. Wenn aus den Bildinformationen gleichzeitig noch Abstände zu der Wandung des Hohlraumes berechnet werden, kann ein 3D-Modell des Hohlraumes von der Auswerteeinrichtung erzeugt werden und die Bildaufnahmeeinrichtung somit einen 3D-Scanner bilden.

Die Bildaufnahmeeinrichtung kann über eine Signalverbindung mit einer Bildauswerteeinrichtung verbunden sein, wobei die Signalverbindung vorzugweise zur digitalen Übertragung der von der Bildaufnahmeeinrichtung erfassten Bilddaten ausgebildet ist. Die Bildauswerteeinrichtung kann vorzugsweise zum Erzeugen eines vollständigen Abbildes des Hohlraumes ausgebildet sein. Ferner kann sie bevorzugt zum Erzeugen vollsphärischer Bilder, wie es vorangehend beschrieben wurde, ausgebildet sein. Die Bildauswerteeinrichtung kann so ausgestaltet sein, dass sie die Bildauswertung in Echtzeit oder aber nach dem vollständigen Scan des Hohlraumes vornimmt.

Vorzugsweise ist die Bildaufnahmeeinrichtung zur Aufnahme von Einzelbildern ausgebildet und eine Bildauswerteeinrichtung vorhanden, welche derart ausgebildet ist, dass sie die Einzelbilder zu einem Gesamtbild des Hohlkörpers zusammensetzt. Ein solches Gesamtbild kann dann später an der Bildauswerteeinrichtung oder einer Bildbetrachtungseinrichtung betrachtet werden, wobei vom Nutzer beliebige Punkte des Hohlraumes angefahren und betrachtet werden können. Es ist dann bevorzugt eine virtuelle Durchfahrt durch den Hohlkörper möglich. Wie oben beschrieben, kann die Bildaufnahmeeinrichtung jedoch auch so ausgebildet sein, dass sie keine Einzelbilder sondern zur Aufnahme eines Video-Films ausgebildet ist.

Besonders vorteilhaft ist es darüber hinaus, wenn die Lichtquellen als LED ausgebildet sind. Dies ist besonders im Hinblick auf den Energiebedarf von Vorteil. Darüber hinaus ermöglichen die LED eine Vielzahl von Lichtquellen anzuordnen, welche einzeln angesteuert werden können. So lässt sich eine sehr genaue Anpassung der Beleuchtung bzw. Lichtstärke in einzelnen Abstrahlrichtungen, insbesondere abhängig von Bewegungen der Bildaufnahmeeinrichtung realisieren.

Gemäß noch einer weiteren bevorzugten Ausführungsform der Erfindung sind die Lichtquellen und die Licht-Steuer-Einheit derart ausgestaltet, dass die Lichtquellen als Blitzlampen angesteuert werden. Dies bedeutet, dass die Lichtquellen nicht konstant leuchten, sondern vorzugsweise nur in den Momenten, in denen von der Bildaufnahmeeinrichtung Einzelbilder aufgenommen werden, aufblitzen bzw. aufleuchten. Insbesondere wenn die Bildaufnahmeeinrichtung zur Aufnahme eines Video-Films ausgebildet ist, ist es jedoch bevorzugt, die Lichtquellen so auszubilden, dass sie konstant leuchten und nicht als Blitzlampen angesteuert werden. Dabei können die einzelnen Lichtquellen in ihrer Helligkeit eingestellt werden oder es können auch gezielt einzelne Lichtquellen abgeschaltet werden um die Lichtstärke in bestimmten Blickrichtungen zu reduzieren.

Die Erfindung ist nachfolgend anhand eines in der Zeichnung dargestellten Ausführungsbeispiels näher erläutert. Es zeigen
Fig. 1A, Fig. 1B sind eine Seitenansicht und eine Draufsicht auf die Unterseite einer Bildaufnahmeeinrichtung für ein Inspektionssystem für Hohlkörper gemäß einer Ausführungsform der Erfindung;
Fig. 2 ist eine schematische Darstellung einer Beleuchtungseinrichtung, einer Licht-Steuer-Einheit und einem Drehwinkelsensor für eine Bildaufnahmeeinrichtung eines Inspektionssystems gemäß Fig. 1A und Fig. 1B;
Fig. 3 ist eine schematische Darstellung der Lichtausbreitung mit unterschiedlichen Lichtstärken der Lichtquellen; und
Fig. 4A-4E sind weitere jeweilige schematische Darstellungen der Ausleuchtungsmöglichkeiten mittels der in Fig. 2 dargestellten Licht-Steuer-Einheit.

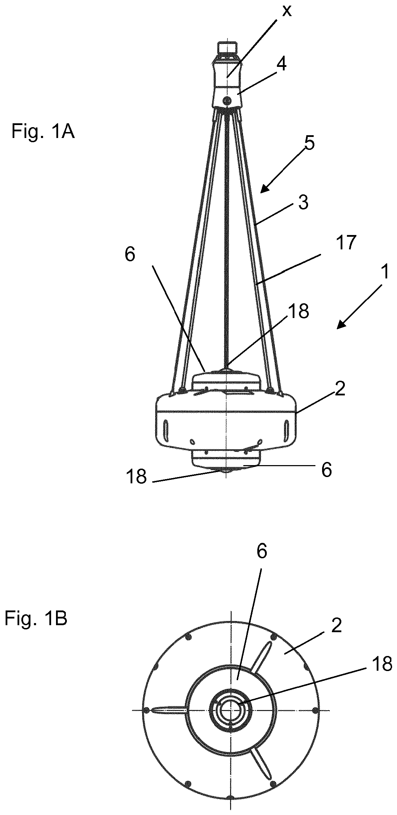

Fig. 1A ist eine Seitenansicht und Fig. 1B ist eine Draufsicht einer Bildaufnahmeeinrichtung 1 mit einem Kamerasystem für ein Inspektionssystem für Hohlkörper gemäß einer Ausführungsform der Erfindung. Die hier dargestellte Bildaufnahmeeinrichtung 1 ist für eine Schachtinspektion vorgesehen. Fig. 1A und B zeigen eine Bildaufnahmeeinrichtung 1 eines erfindungsgemäßen Inspektionssystems für Hohlkörper, welche ein Gehäuse 2 aufweist, in welchem das Kamerasystem und eine Beleuchtungseinrichtung angeordnet sind. Das Gehäuse 2 ist an mehreren Tragseilen 3 aufgehangen, welche in eine Aufhängung 4 münden, welche wiederum mit dem Ende eines Kabels oder eines Seils verbunden werden kann, über welche diese Bildaufnahmeeinrichtung von oben in einen Hohlkörper herabgelassen werden kann. Das nicht gezeigte Seil bildet gemeinsam mit der Aufhängung 4 und den Tragseilen 3 eine Vorschubeinrichtung. An den Tragseilen 3 verlaufen elektrische Anschlussleitungen 17 von dem Gehäuse 2 zu der Aufhängung 4. An der Aufhängung 4 wird ein Kabel angeschlossen, welches aufgenommene Bild- und Steuersignale an eine beabstandete Auswerteeinrichtung überträgt und gleichzeitig der Energieversorgung der Bildaufnahmeeinrichtung 1 dient. In umgekehrter Richtung können Steuersignale von der Auswerteeinrichtung an die Bildaufnahmeeinrichtung 1 übertragen werden. Dieses Kabel kann gleichzeitig das Tragkabel sein, an welchem die Bildaufnahmeeinrichtung aufgehangen ist.

Alternativ, wenn das Inspektionssystem für eine Inspektion von Hohlkörpern in Form von horizontalen Rohren ausgelegt wäre, könnte anstelle der Aufhängung mittels eines Kabels und der Tragseile 3 ein Schiebestab (nicht dargestellt) Verwendung finden.

In dem Gehäuse 2 sind zwei hochauflösende Digitalkameras mit jeweils einem Weitwinkelobjektiv 18 angeordnet, die zwei Weitwinkelobjektive 18 sind als fish-eye-Objektive ausgebildet, sodass sie im Wesentlichen ein halbkugelförmiges Bild aufnehmen. Die beiden Weitwinkelkameras sind entgegengesetzt gerichtet, sodass ihre Bilder zu einem vollsphärischen Bild zusammengesetzt werden können. Mit dieser Bildaufnahmeeinrichtung kann das gesamte Schachtinnere in einer einzigen vertikalen Befahrung optisch gescannt werden. Dabei werden vorzugsweise in regelmäßigen Abständen von den beiden Kameras mit den Weitwinkelobjektiven 18 Einzelbilder aufgenommen, welche über die Kabel 17 an eine Bildauswerteeinrichtung übertragen werden, wo die Bilder dann zu einem vollständigen Abbild des Inneren des Hohlraumes bzw. Schachtes zusammengesetzt werden, sodass sie dann an der Bildauswerteeinrichtung oder einer Bildbetrachtungseinrichtung betrachtet werden können. Dabei ist eine virtuelle Durchfahrt durch den Hohlraum möglich und einzelne Punkte können aus verschiedenen Perspektiven betrachtet werden. Aus den Bildern kann ggf. sogar ein dreidimensionales Modell des Schachtes gebildet werden, welchem sich Abstände oder Größen entnehmen lassen.

Die Beleuchtungseinrichtungen 6 umgeben die Objektive 18 ringförmig und strahlen vorzugsweise ebenfalls halbkugelförmig ab, sodass der gesamte von dem Weitwinkelobjektiv 18 aufgenommene Bereich ausgeleuchtet werden kann. Wie unten beschrieben, bestehen die Beleuchtungseinrichtungen 6 aus einer Vielzahl von Lichtquellen 7, welche vorzugsweise ringförmig verteilt um die Weitwinkelobjektive 18 herum angeordnet sind.

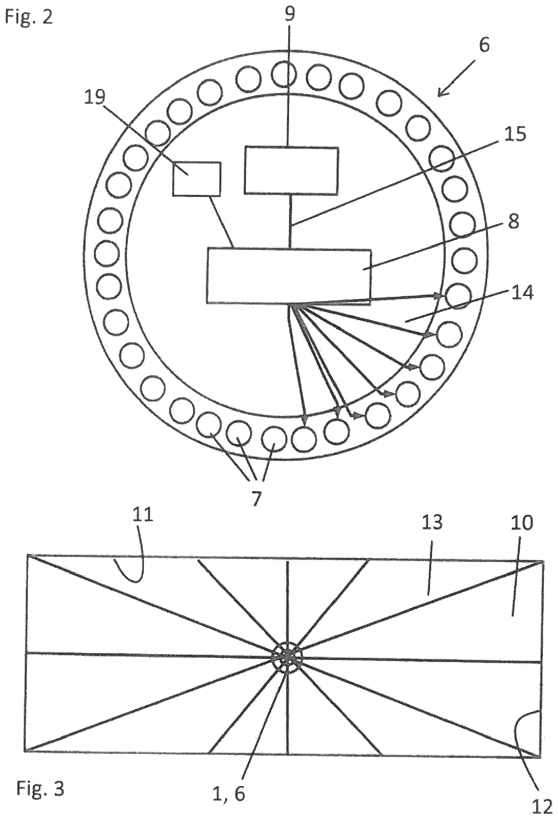

Fig. 2 ist eine schematische Darstellung einer solchen Beleuchtungseinrichtung 6, wie sie jeweils um die Weitwinkelobjektive 18 angeordnet ist und welche eine Vielzahl von Lichtquellen 7 mit unterschiedlichen Abstrahlrichtungen aufweist. Die Beleuchtungseinrichtung 6 ist ringförmig ausgebildet, so dass die einzelnen Lichtquellen 7, welche in der hier dargestellten Ausführungsform als Light Emitting Diodes (LEDs) ausgeführt sind, umfänglich verteilt um das in Fig. 2 nicht gezeigte Weitwinkelobjektiv 18 angeordnet sind. In dem in Fig. 1A dargestellten Gehäuse 2 der Bildaufnahmeeinrichtung 3 befindet sich neben den oben erwähnten Kameras auch eine Licht-Steuer-Einheit 8 sowie ein Drehwinkelsensor 9. Die Licht-Steuer-Einheit 8 ist mit den Lichtquellen 7 über jeweilige Verbindungen 14 verbunden und kann jede der Lichtquellen 7 einzeln ansteuern, um die Lichtstärke der angesteuerten Lichtquelle 7 zu verändern bzw. entsprechend einer Hohlraum- bzw. Schachtgeometrie anzupassen. Alternativ wäre es auch denkbar, mittels der Licht-Steuer-Einheit 8 die Lichtquellen 7 gruppenweise anzusteuern, falls erforderlich. Hierzu weist die Licht-Steuer-Einheit 8 eine Einstellfunktion auf, über welche die Lichtstärke der einzelnen Lichtquellen 7 einzeln oder in Gruppen festlegbar ist. Die Einstellung der einzelnen Lichtstärken kann entweder durch einen Anwender erfolgen, welcher diese entsprechend über eine Eingabeeinheit, welche hier nicht dargestellt ist, einstellen kann. Alternativ können die Lichtstärken aber auch automatisch über die Auswertung aufgenommener Bilder oder unter Verwendung von Abstandssensoren für die jeweiligen Bereiche der einzelnen Lichtquellen 7 oder Lichtquellengruppen eingestellt werden.

Die Eingabeeinheit ist vorzugsweise in eine Auswerteeinheit bzw. in eine Steuereinheit des Inspektionssystems integriert, welche beabstandet von der Bildaufnahmeeinrichtung beispielsweise in einem Inspektionsfahrzeug angeordnet ist. Diese Steuereinheit ist mit der Bildaufnahmeeinrichtung wie beschrieben über ein Kabel verbunden. Die Eingabeeinheit zur Eingabe der Lichtstärken ist dabei vorzugsweise als Softwaremodul in der Steuereinheit realisiert. Die Lichtsteuereinheit 8 kann entweder vollständig in dem Gehäuse 2 angeordnet sein, kann aber auch ganz oder teilweise in eine beabstandete Steuereinrichtung bzw. Steuereinheit integriert sein.

Der Drehwinkelsensor 9 ist in der hier dargestellten Ausführungsform als Gyroskop ausgeführt und ebenfalls mit der Licht-Steuer-Einheit 9 über die Verbindung 15 verbunden. Die Licht-Steuer-Einheit 9 liest die durch den Drehwinkelsensor 9 gewonnenen Daten aus, so dass beispielsweise bei einer unbeabsichtigten oder auch beabsichtigten Rotation der Bildaufnahmeeinrichtung 1 die Licht-Steuer-Einheit 9 die Lichtquellen 7 entsprechend dem veränderten Drehwinkel steuert, um ihre Lichtstärken an den geänderten Drehwinkel anzupassen und eine gleichmäßige Ausleuchtung sicherzustellen. Der Drehwinkelsensor 9 erfasst den Drehwinkel um die Längs- bzw. Vorschubachse ×, welche in Fig. 1A gezeigt ist. Dabei kann das Ausgangssignal des Drehwinkelsensors 9 gleichzeitig dazu genutzt werden, die Drehung des Bildes zu kompensieren, sodass das von der Bildaufnahmeeinrichtung 1 aufgenommene Bild stets in seiner Lage unverändert bleibt, auch wenn die Bildaufnahmeeinrichtung 1 sich um die Vorschubachse × dreht. Die Anpassung der Beleuchtung an den Drehwinkel erfolgt vorzugsweise in der Weise, dass die Beleuchtungsstärke in eine bestimmte Winkelrichtung radial zu der Vorschubachse × auf einem zuvor eingestellten Wert konstant gehalten wird, auch wenn die Bildaufnahmeeinrichtung 2 sich um die Längsachse × dreht. Dazu werden dynamisch die einzelnen Lichtquellen 7 gedimmt oder ein- und ausgeschaltet, um die Lichtstärke in eine bestimmte Raumrichtung konstant zu halten, auch wenn sich die Beleuchtungseinrichtung 6 als Ganzes dreht.

Weiterhin können in dem Gehäuse 2 (siehe Fig. 1A) ein oder mehrere Beschleunigungssensoren 19 vorgesehen sein, welche eine Pendelbewegung des Gehäuses 2 um eine Achse quer zu der Längsachse × erfassen und ebenfalls mit der Licht-Steuer-Einheit 9 verbunden sind, so dass diese die Lichtstärken der einzelnen Lichtquellen 7 dann entsprechend der detektierten Pendelbewegung anpasst, um eine gleichmäßige Ausleuchtung des zu inspizierenden Hohlraums aufrecht zu erhalten.

Ferner ist es gemäß einer weiteren Ausführungsform auch möglich, zusätzlich die gesamte Position des Gehäuses 2 bzw. der daran angeordneten Beleuchtungseinrichtung 6 über eine inertiale Messeinheit zu bestimmen, was eine noch genauere Lichtstärkenanpassung der einzelnen Lichtquellen 7 ermöglicht. Alternativ oder zusätzlich könnte in dem Gehäuse 2 ferner ein Magnetometer angeordnet werden, über welches eine Lagebestimmung und Erfassung von Lageänderungen möglich ist und welches mit der Licht-Steuer-Einheit 8 kommuniziert und eine entsprechende Regelung der Lichtstärken der Lichtquellen 7 abhängig von den erfassten Lageänderungen bewirkt.

Fig. 3 ist eine schematische Darstellung einer Lichtausbreitung mit unterschiedlichen Lichtstärken der Lichtquellen 7 (siehe Fig. 2). Hier ist die Bildaufnahmeeinrichtung 1 mit den ringförmig an dem Gehäuse 2 angeordneten Lichtquellen 7 (siehe Fig. 2) mittig in einem rechteckigen Hohlkörper 10, beispielsweise einen Schacht mit rechteckigem Querschnitt, angeordnet. Da der Abstand der Bildaufnahmeeinrichtung 1 zu den Innenwänden der kurzen Querseiten 12 des Schachts größer ist als der Abstand zu den Innenwänden der langen Längsseiten 11 des Schachts, müssen die Lichtquellen 7 am Umfangsbereich des Gehäuses 2, welcher den Innenwänden der kurzen Querseiten 12 gegenüberliegen, eine höhere Lichtstärke haben als die Lichtquellen 7, welche den Innenwänden der langen Längsseiten 11 gegenüberliegen. Durch die entsprechende Einstellung und Steuerung der jeweiligen Lichtstärken in den verschiedenen Abstrahlrichtungen 13, welche hier schematisch durch die Linien 13 dargestellt sind, durch die Licht-Steuer-Einheit 8 wird eine gleichmäßige Ausleuchtung des Hohlkörpers 10 bzw. Schachts bei mittiger Anordnung der Bildaufnahmeeinrichtung 1 bzw. Beleuchtungseinrichtung 6 erzielt. Dabei können die Lichtstärken in den einzelnen Abstrahlrichtungen 13 zunächst zu Beginn einer Inspektion des Hohlraumes 10 voreingestellt werden und dann durch die Licht-Steuer-Einheit 8 bei einer erfassten Drehung um die Vorschubachse × entsprechend verändert werden, um die Ausleuchtung der Innenflächen des Hohlraumes 10, d. h., der Längsseiten 11 und der Querseiten 12 auch bei einer Bewegung bzw. Drehung der Beleuchtungseinrichtung 6 konstant zu halten.

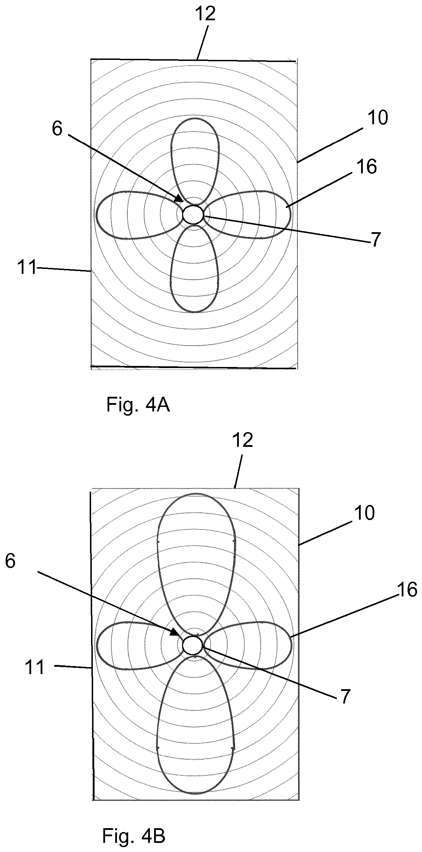

Fig. 4A-4E sind weitere jeweilige schematische Darstellungen der Ausleuchtungsmöglichkeiten mittels der in Fig. 2 dargestellten Licht-Steuer-Einheit 8. Rein exemplarisch sind hier jeweils vier Lichtkegel 16 dargestellt, welche von jeweiligen Lichtquellen 7 ausgehen dargestellt. Es ist natürlich jegliche andere Anzahl von Lichtquellen 7 möglich. Bevorzugt ist eine wesentlich größere Anzahl von Lichtquellen 7 umfänglich verteilt angeordnet. In der in Fig. 4A dargestellten Situation befindet sich die Beleuchtungseinrichtung 6 mittig in einem rechteckigen Hohlkörper 10. Alle Lichtquellen 7 strahlen hier mit gleicher Lichtstärke, so dass eine gleichmäßige Ausleuchtung des Hohlkörpers 10 nicht erfolgt. Insbesondere entstehen hier nicht ausgeleuchtete Bereiche zu den weiter beabstandeten Querseiten 12 hin, während die Lichtstärken der Lichtquellen 7 zu den Innenwänden der Längsseiten 11 hin für den kürzeren Abstand ausreichend sind und die Mittelbereiche der Längsseiten 11 ausreichend beleuchten.

Fig. 4B stellt eine Situation dar, in welcher die jeweiligen Lichtquellen 7, welche den Innenwänden der weiter beabstandeten Querseiten 12 gegenüberliegen, so angesteuert werden, dass sie eine größere Lichtstärke abgeben als diejenigen Lichtquellen 7, die den Innenwänden der Längsseiten 11 gegenüberliegen Hierdurch wird im Gegensatz zu der in Fig. 4A dargestellten Situation eine gleichmäßigere Ausleuchtung des gesamten rechteckigen Hohlkörpers 10 trotz der unterschiedlichen Abstände der Innenwandungen von den Lichtquellen 7 erreicht.

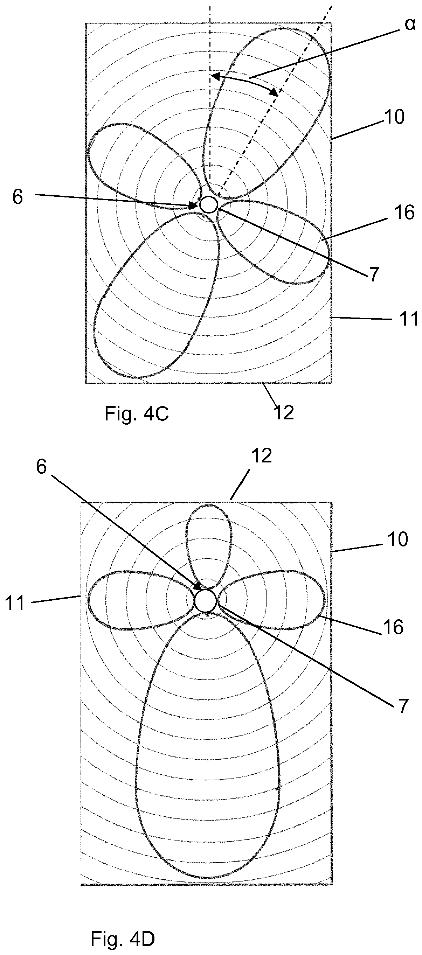

In Fig. 4C ist eine Situation dargestellt, in der das Gehäuse 2 der Bildaufnahmeeinrichtung 1 und somit die Beleuchtungseinrichtung 6 um einen Winkel α gegenüber der Situation in Fig. 4B gedreht worden ist, wobei die Lichtstärken der beiden den Innenwänden der Längsseiten 11 gegenüberliegenden Lichtquellen 7 entsprechend des Drehwinkels bzw. des somit nun weiteren Abstands zu den Innenwänden der Längsseiten 11 erhöht wurden, so dass eine gleichmäßige Ausleuchtung aufrecht erhalten bleibt.

Fig. 4D zeigt eine Situation, in welcher sich das Gehäuse 2 der Bildaufnahmeeinrichtung 1 und somit die Beleuchtungseinrichtung 6 nicht mittig sondern dichter zu einer der beiden kurzen Querseiten 12 befindet, was beispielsweise durch eine Auslenkung bzw. Pendelbewegung des Gehäuses 2 an den Tragseilen 3 erfolgen kann. Hier steuert die Licht-Steuer-Einheit 8 die Lichtquellen 7 derartig, dass die Lichtstärke der nun weiter entfernt von der anderen Querseite befindliche Lichtquelle 7 entsprechend erhöht worden ist, während die Lichtstärke der Lichtquelle 7, die nun näher an der gegenüberliegenden Innenwand der Querseite 12 liegt, entsprechend verringert wurde, so dass weder dunkle noch überstrahlte Bereiche entstehen und der Hohlkörper 10 trotz veränderter Position der Beleuchtungseinrichtung 6 gleichmäßig ausgeleuchtet wird.

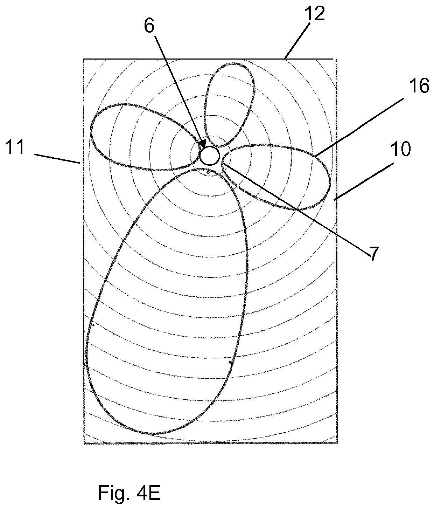

Fig. 4E zeigt schließlich die in Fig. 4D dargestellte Situation, jedoch hier mit zusätzlicher Rotation, wobei wiederum die Lichtstärken aller Lichtquellen 7 entsprechend ihren neuen veränderten Abständen zu den jeweiligen Innenwänden der Längs- und Querseiten 11, 12 gesteuert worden sind, um eine gleichmäßige Ausleuchtung des Hohlkörpers 10 zu erzielen.

### Bezugszeichen

- 1: Bildaufnahmeeinrichtung
- 2: Gehäuse
- 3: Tragseile
- 4: Aufhängung
- 5: Vorschubelement
- 6: Beleuchtungseinrichtung
- 7: Lichtquellen
- 8: Licht-Steuer-Einheit
- 9: Drehwinkelsensor
- 10: Hohlkörper / Schacht
- 11: Längsseite
- 12: Querseite
- 13: Linien (schematische Darstellungen der Abstrahlrichtungen)
- 14: Verbindung
- 15: Verbindung
- 16: Lichtkegel
- 17: Kabel
- 18: Weitwinkelobjektiv
- 19: Beschleunigungssensoren

- α: Winkel

## Patentansprüche

1. Inspektionssystem für Hohlkörper (10) mit
einer Bildaufnahmeeinrichtung (1), welche in den Hohlkörper (10) einbringbar ist und mit einer Beleuchtungseinrichtung (6) zum Ausleuchten des Hohlkörpers (10) versehen ist, wobei
die Beleuchtungseinrichtung (6) eine Mehrzahl von Lichtquellen (7) mit unterschiedlichen Abstrahlrichtungen und eine mit den Lichtquellen (7) verbundene Licht-Steuer-Einheit (8) aufweist, welche derart ausgebildet ist, dass sie die Lichtstärke der Lichtquellen (7) einzeln oder in mehreren Gruppen verändern kann, und mit zumindest einem Sensor (9; 19) zur Erfassung einer Lageänderung der Bildaufnahmeeinrichtung (1) in dem Hohlkörper (10),
**dadurch gekennzeichnet, dass** der Sensor (9; 19) mit der Licht-Steuer-Einheit (8) verbunden ist und die Licht-Steuer-Einheit (8) derart ausgestaltet ist, dass sie die Lichtstärke der Lichtquellen (7) entsprechend einer durch den Sensor (9; 19) erfassten Lageänderung derart steuert, dass die von der Beleuchtungseinrichtung (6) erzeugte Ausleuchtung in zumindest einer Raumrichtung auch bei einer Lageänderung der Beleuchtungseinrichtung (6) im Wesentlichen konstant bleibt.

2. Inspektionssystem gemäß Anspruch 1, **dadurch gekennzeichnet, dass** die Licht-Steuer-Einheit (8) eine Einstellfunktion aufweist, über welche die jeweilige Lichtstärke der Lichtquellen (7) von der Vielzahl von Lichtquellen (7) durch einen Anwender einzeln oder gruppenweise festlegbar ist.

3. Inspektionssystem gemäß Anspruch 1 oder 2, **dadurch gekennzeichnet, dass** die Bildaufnahmeeinrichtung (1) an einem Vorschubelement (5) und insbesondere einem Tragseil (3) oder einem Schiebestab befestigt ist.

4. Inspektionssystem gemäß einem der Ansprüche 1 bis 3, **dadurch gekennzeichnet, dass** die Vielzahl von Lichtquellen (7) ringförmig und insbesondere umfänglich zumindest eines Objektives (18) der Bildaufnahmeeinrichtung (1) angeordnet ist

5. Inspektionssystem gemäß einem der vorhergehenden Ansprüche, **dadurch gekennzeichnet, dass** der zumindest eine Sensor (9; 19) ein Bewegungs- und/oder Beschleunigungssensor ist.

6. Inspektionssystem gemäß einem der vorangehenden Ansprüche, **dadurch gekennzeichnet, dass** der zumindest eine Sensor ein Sensor zur Erfassung eines Drehwinkels und insbesondere ein Gyrosensor (9) ist.

7. Inspektionssystem gemäß einem der vorangehenden Ansprüche, **dadurch gekennzeichnet, dass** der zumindest eine Sensor (9) derart angeordnet ist, dass er einen Drehwinkel der Bildaufnahmeeinrichtung (1) um eine Vorschubachse (×) der Bildaufnahmeeinrichtung (1) und/oder eine Achse quer zu dieser Vorschubachse (×) erfasst.

8. Inspektionssystem gemäß einem der vorangehenden Ansprüche, **dadurch gekennzeichnet, dass** das Inspektionssystem zumindest einen Abstandssensor oder eine Abstands-Erfassungseinrichtung aufweist, welche(r) einen Abstand der Beleuchtungseinrichtung (6) zu einer Wand (11, 12) des Hohlkörpers erfasst, wobei die Licht-Steuer-Einheit (8) derart ausgebildet ist, dass sie die Lichtstärken der Lichtquellen (7) auf der Basis des durch den Sensor bzw. Abstands-Erfassungseinrichtung erfassten Abstands einstellt.

9. Inspektionssystem gemäß einem der vorangehenden Ansprüche, **dadurch gekennzeichnet, dass** das Inspektionssystem zumindest eine inertiale Messeinheit aufweist, welche eine Position der Beleuchtungseinheit (6) in dem Hohlkörper (10) erfasst, wobei die Licht-Steuer-Einheit (8) derart ausgebildet ist, dass sie die Lichtstärken der Lichtquellen (7) auf der Basis der von der inertialen Messeinheit ermittelten Position der Beleuchtungseinheit (6) einstellt.

10. Inspektionssystem gemäß einem der vorangehenden Ansprüche, **dadurch gekennzeichnet, dass** die Bildaufnahmeeinrichtung (1) mit zwei entgegengesetzt gerichteten Weitwinkelobjektiven (18) ausgestaltet ist.

11. Inspektionssystem gemäß einem der vorangehenden Ansprüche, **dadurch gekennzeichnet, dass** die von der Bildaufnahmeeinrichtung (1) über eine Signalverbindung mit einer Bildauswerteeinrichtung verbunden ist, wobei die Signalverbindung vorzugweise zur digitalen Übertragung der von der Bildaufnahmeeinrichtung (1) erfassten Bilddaten ausgebildet ist.

12. Inspektionssystem gemäß einem der vorangehenden Ansprüche, **dadurch gekennzeichnet, dass** die Bildaufnahmeeinrichtung (1) zur Aufnahme von Einzelbildern ausgebildet ist und eine Bildauswerteeinrichtung vorhanden ist, welche derart ausgebildet ist, dass sie die Einzelbilder zu einem Gesamtbild des Hohlkörpers (10) zusammensetzt.

13. Inspektionssystem gemäß einem der vorangehenden Ansprüche, **dadurch gekennzeichnet, dass** die Lichtquellen (7) als LED ausgebildet sind.

14. Inspektionssystem gemäß einem der vorangehenden Ansprüche, **dadurch gekennzeichnet, dass** die Lichtquellen (7) und die Licht-Steuer-Einheit (8) derart ausgestaltet sind, dass die Lichtquellen (7) als Blitzlampen angesteuert werden.

## Claims

1. Inspection system for hollow bodies (10) with an image recording device (1), which can be inserted into the hollow body (10) and is equipped with an illumination device (6) for illumination device the hollow body (10), wherein the illumination device (6) comprises a plurality of light sources (7) with different beam directions and a light control unit (8) connected to the light sources (7), which is designed in such a way that it individually increases the luminous intensity of the light sources (7) or in a plurality of groups, and with at least one sensor (9; 19) for detecting a change in position of the image recording device (1) in the hollow body (10), **characterized in that** the sensor (9; 19) is connected to the light control unit (8) and the light control unit (8) is designed in such a way that it controls the light intensity of the light sources (7) in accordance with a change in position detected by the sensor (9; 19) in such a way that the illumination generated by the illumination device (6) remains essentially constant in at least one spatial direction even if the position of the illumination device (6) changes.

2. Inspection system according to claim 1, **characterized in that** the light control unit (8) comprises an adjustment function by means of which the respective light intensity of the light sources (7) from the plurality of light sources (7) can be determined individually or in groups by a user.

3. Inspection system according to claim 1 or 2, **characterized in that** the image recording device (1) is attached to a feed element (5) and, in particular, a suspension rope (3) or a push rod.

4. Inspection system according to any one of the claims 1 to 3, **characterized in that** the plurality of light sources (7) is arranged in a ring and, in particular, in at least one lens (18) of the image recording device (1).

5. Inspection system according to any one of the preceding claims, **characterized in that** at least one sensor (9; 19) is a motion and/or acceleration sensor.

6. Inspection system according to any one of the preceding claims, **characterized in that** the at least one sensor is a sensor for detecting an angle of rotation and, in particular, a gyroscope sensor (9).

7. Inspection system according to any one of the preceding claims, **characterized in that** at least one sensor (9) is arranged in such a way that it detects an angle of rotation of the image recording device (1) around a feed axis (×) of the image recording device (1) and/or an axis transverse to this feed axis (×).

8. Inspection system according to any one of the preceding claims, **characterized in that** the inspection system comprises at least one distance sensor or a distance-detection device which detects a distance of the illumination device (6) from a wall (11, 12) of the hollow body, wherein the light control unit (8) is designed in such a way that it determines the light intensities of the light sources (7) on the basis of the distance detected by the sensor or distance-detection device.

9. Inspection system according to any one of the preceding claims, **characterized in that** the inspection system comprises at least one inertial measurement unit which detects a position of the illumination unit (6) in the hollow body (10), wherein the light control unit (8) is designed in such a way that it adjusts the luminous intensities of the light sources (7) on the basis of the position of the illumination unit (6) determined by the inertial measurement unit.

10. Inspection system according to any one of the preceding claims, **characterized in that** the image recording device (1) is designed with two opposingly directed wide-angle lenses (18).

11. Inspection system according to any one of the preceding claims, **characterized in that** the image recording device (1) is connected via a signal connection to an image evaluation device, wherein the signal connection is preferably designed for the digital transmission of the image data acquired by the image recording device (1).

12. Inspection system according to any one of the preceding claims, **characterized in that** the image recording device (1) is designed to capture individual images and an image evaluation device is available which is designed in such a way that it assembles the individual images into an overall picture of the hollow body (10).

13. Inspection system according to any one of the preceding claims, **characterized in that** the light sources (7) are designed as LEDs.

14. Inspection system according to any one of the preceding claims, **characterized in that** the light sources (7) and the light control unit (8) are designed in such a way that the light sources (7) are controlled as flash lamps.

## Revendications

1. Système d'inspection de corps creux (10) comprenant
un dispositif de prise d'image (1) qui peut être inséré dans le corps creux (10) et est muni d'un dispositif d'éclairage (6) pour éclairer le corps creux (10),
le dispositif d'éclairage (6) comprenant une pluralité de sources de lumière (7) avec des directions de rayonnement différentes et une unité de commande de lumière (8) connectée aux sources de lumière (7), qui est conçue de telle sorte qu'elle puisse modifier l'intensité lumineuse des sources de lumière (7) individuellement ou en plusieurs groupes, et avec au moins un capteur (9 ; 19) pour détecter un changement de position du dispositif de capture d'image (1) dans le corps creux (10),
**caractérisé en ce que** le capteur (9 ; 19) est connecté à l'unité de commande de lumière (8) et **en ce que** l'unité de commande de lumière (8) est conçue de telle manière qu'elle commande l'intensité lumineuse des sources de lumière (7) en fonction d'un changement de position détecté par le capteur (9 ; 19) de telle manière que l'éclairage produit par le dispositif d'éclairage (6) reste sensiblement constant dans au moins une direction spatiale, même en cas de changement de position du dispositif d'éclairage (6).

2. Système d'inspection selon la revendication 1, **caractérisé en ce que** l'unité de commande de lumière (8) comprend une fonction de réglage par l'intermédiaire de laquelle l'intensité lumineuse respective des sources de lumière (7) de la pluralité de sources de lumière (7) peut être déterminée par un utilisateur individuellement ou par groupe.

3. Système d'inspection selon la revendication 1 ou 2, **caractérisé en ce que** le dispositif de capture d'image (1) est fixé à un élément d'avance (5) et en particulier à un câble porteur (3) ou à une tige de poussée.

4. Système d'inspection selon l'une quelconque des revendications 1 à 3, **caractérisé en ce que** la pluralité de sources de lumière (7) est agencée de manière annulaire et en particulier de manière périphérique d'au moins un objectif (18) du dispositif de prise d'image (1).

5. Système d'inspection selon l'une quelconque des revendications précédentes, **caractérisé en ce que** ledit au moins un capteur (9 ; 19) est un capteur de mouvement et/ou d'accélération.

6. Système d'inspection selon l'une quelconque des revendications précédentes, **caractérisé en ce que** ledit au moins un capteur est un capteur destiné à détecter un angle de rotation et en particulier un capteur gyroscopique (9).

7. Système d'inspection selon l'une quelconque des revendications précédentes, **caractérisé en ce que** ledit au moins un capteur (9) est agencé de façon telle qu'il détecte un angle de rotation du dispositif de capture d'image (1) autour d'un axe d'avance (x) du dispositif de capture d'image (1) et/ou d'un axe transversal à cet axe d'avance (x).

8. Système d'inspection selon l'une quelconque des revendications précédentes, **caractérisé en ce que** le système d'inspection comprend au moins un capteur de distance ou un dispositif de détection de distance qui détecte une distance du dispositif d'éclairage (6) par rapport à une paroi (11, 12) du corps creux, l'unité de commande de lumière (8) étant conçue pour ajuster les intensités lumineuses des sources de lumière (7) sur la base de la distance détectée par le capteur ou le dispositif de détection de distance.

9. Système d'inspection selon l'une quelconque des revendications précédentes, **caractérisé en ce que** le système d'inspection comprend au moins une unité de mesure inertielle qui détecte une position du dispositif d'éclairage (6) dans le corps creux (10), l'unité de commande de lumière (8) étant conçue de manière à régler les intensités lumineuses des sources de lumière (7) sur la base de la position du dispositif d'éclairage (6) déterminée par l'unité de mesure inertielle.

10. Système d'inspection selon l'une quelconque des revendications précédentes, **caractérisé en ce que** le dispositif de capture d'image (1) est conçu avec deux objectifs grand angle (18) orientés de manière opposée.

11. Système d'inspection selon l'une quelconque des revendications précédentes, **caractérisé en ce que** le dispositif de capture d'image (1) est relié à un dispositif d'évaluation d'image par l'intermédiaire d'une connexion de signal, la connexion de signal étant de préférence conçue pour une transmission numérique des données d'image détectées par le dispositif de capture d'image (1).

12. Système d'inspection selon l'une quelconque des revendications précédentes, **caractérisé en ce que** le dispositif de capture d'image (1) est conçu pour recevoir des images individuelles et qu'un dispositif d'évaluation d'image est prévu qui est conçu de manière à rassembler les images individuelles en une image globale du corps creux (10).

13. Système d'inspection l'une quelconque des revendications précédentes, **caractérisé en ce que** les sources de lumière (7) sont réalisées sous la forme de diodes électroluminescentes, DEL.

14. Système d'inspection selon l'une quelconque des revendications précédentes, **caractérisé en ce que** les sources de lumière (7) et l'unité de commande de lumière (8) sont conçues de telle manière que les sources de lumière (7) soient commandées comme des lampes éclair.
